# EUROPEAN PATENT SPECIFICATION

(11) **EP 0 663 228 B1**
(45) Date of publication and mention of the grant of the patent: **09.08.2000**
(21) Application number: 94200091.0
(22) Date of filing: 15.01.1994
(51) Int. Cl.: B01D 46/02, B01D 46/42

(54) **Filter element for the separation of dust particles from a gas**
Filterelement zur Entfernung von Staubpartikeln aus einem Gas
Elément de filtrage pour séparer des particules de poussière d'un gaz

(43) Date of publication of application: 19.07.1995
(73) Proprietor: FILTRAIR B.V., NL-8447 GE Heerenveen (NL)
(72) Inventor: Borkent, Albert, Oranjewoud (NL); Kuiper, Erik, Oudehaske (NL); Godfried Van Vreeland, Sander, Enschede (NL)
(74) Representative: Merkelbach, B.

(56) References cited:
- DE-A- 2 449 330
- DE-U- 9 208 755
- FR-A- 2 425 829
- FR-A- 2 436 621
- US-A- 4 300 927

## Description

The invention relates to a filterelement for separation of dust particles from a gas or air flow comprising a number of filter pockets and a main support frame, the open mouths edges of the filter pockets being interconnected to the main support frame and its interconnecting traversing ribs, the main support comprises of two frames that can be interfitted to each other and to said filter pockets, the periphery of the interior frame comprises a number of protrusions whereas the exterior frame is provided with a corresponding number of receiving means such that for interfitting said frames to the main support said protrusions are interlockingly engaged by each of said receiving means by a snapping action due to which simultaneously the open edges of said filter pockets are leakfree and tightly wedged in a narrow slit between the opposed surfaces of said frames.

Such a filterelement, mostly forming part of a large filtration system which is provided with a number of filter-elements e.g. in use for air supply installations for ventilating applications in buildings, plants, industrial installations and the like is described in the US-A-4,300,927. In this known art the filter pockets, however, are undetachably connected to the main support frame by welding, in particular by sonic welding. According to the FR-A-2436621 the filter pockets are also undetachably connected to the frames due to the fact that they are glued to said frames.

Therefore after utilization, when the filter pockets are saturated with dust particles and have to be replaced, it is a great disadvantage that the main support frame is not reusable and so it must be destroyed. Not only filter pockets have to be replaced but inherently also the integrated main support frames - also the environment becomes threatened, because the material of the filter pockets cannot simultaneously be recycled with the material of the main support frame - and moreover, heavily contaminated filter pockets may be considered as falling under chemical refuse for which recycling will not be applicable and for which special regulations for disposition are given.

Other known filtration systems do not allow for an efficient separation of raw material, neither mechanically nor chemically, of such integrated filter pockets from the main support frame so that the reuse of materials by a recycling process is not feasible or practicable.

Another disadvantage of the prior art is involved with the voluminous space required for storage and transport respectively because the inflexible shape of the filterelement, particularly the imbedding of the filter pockets in its main support frame, does not allow for a reduction in volume merely by pressing the sides of adjacent filter pockets together. At the most it will be possible to shelve two filterelements of the prior art, identical in sizes, into each other reversely while making use of the wedged spaces of adjacent stiff filter pockets. Transport costs and storage costs remain so unduly affected.

The invention now provides for a novel filterelement which does not have the aforementioned disadvantages thereby enabling a substantial increase in the usage values of the materials involved and favourably contributing to present high environmental standards, at lower long term system costs. This is achieved in that the periphery of the interior subframe to which the filter pockets are connected, comprises a number of protrusions whereas the exterior subframe is provided with a corresponding number of receiving openings such that for interfitting the subframes into the main support frame, said protrusions are interlockingly engaged by each of said receiving openings whereas the traversing bars or ribs of said frames are provided with holes for the insertion of security means.

This way of interlocking engagement between the subframes and the edges of the filter pockets guarantees during operating time a totally reliable leakfree seal which is still improved in another embodiment of the invention when the main support frame is additionally and preferably provided in the traversing ribs with security locks. Under operation these locks give optimal effect against heavy air or equivalent thrust loads. It has been found that a security lock operating under a magnetic force is a highly preferred embodiment.

This filter element application further will bring about the following advantages:
- the same main support frame is now reusable many times;
- less main support frames must be mechanically/chemically treated and made fit for recycling, which gives less environmental burden;
- storage and transport expenses are decreased because of the need for less storage, transport and packing space now allowing for a substantial larger number of prefabricated filter pockets and frames e.g. in a large seafreight or airfreight container or truck. Practically this means that almost 4 times as many prefabricated novel filterelements can be stored compared with the prior art filterelements in the same volume of space.

An efficient method for the assembly of the invented filterelement is characterized in that in a first operational step the filter pockets are positioned upon a workbench provided with recesses for accomodating the filter pockets with their open edges fixed to the interior subframe while in a second operational step the exterior subframe is positioned over the interior subframe and forcibly pressed down to interlock the protrusions of the interior subframe with the receiving openings of the exterior subframe one and the other in such a way that these frame portions are interconnected firmly and flatly thereby tightly interwedging the filter pockets leakfree in the assembled main support frame and in a third operational step to provide upon the traversing ribs of the main support frame for a number of security locks, in such a way that undesired and/or unauthorized loosening of the interassembled subframes and the filter pockets is thereby prevented.

An efficient method for disassembling an invented filterelement to replace the filter pockets, is characterized in that in a first operational step the security locks are unlocked when the filterelement has been placed upon a workbench, preferably provided with a number of built-in magnets at the location of a security pin lock to disengage the locked pins whereas either in the same operational step or during the next operational step one or more wedge shaped knife tools are forcibly interposed in the narrow slit left between adjacent subframe parts at both sides of a protrusion where the latter is interlockingly engaged and held by a receiving opening causing the protrusion to be released from the receiving opening whereafter the pocket filters can easily be removed from the disengaged interior subframe from which the exterior subframe can now be lifted away.

The invention will be further explained hereinafter in the accompanying drawing whereby certain characteristics and other advantages of the invention may be brought forward.
Fig. 1 is a front view, partly in perspective, of a filterelement according to the invention;
Fig. 2 is a partial cross section through the main support frame along the line A-A of the filterelement in Fig. 1;
Fig. 3 is a partial cross section through the exterior subframe along the line B-B in Fig. 1 and
Fig. 4 is a partial cross section through the interior subframe along the line B-B in Fig. 2.

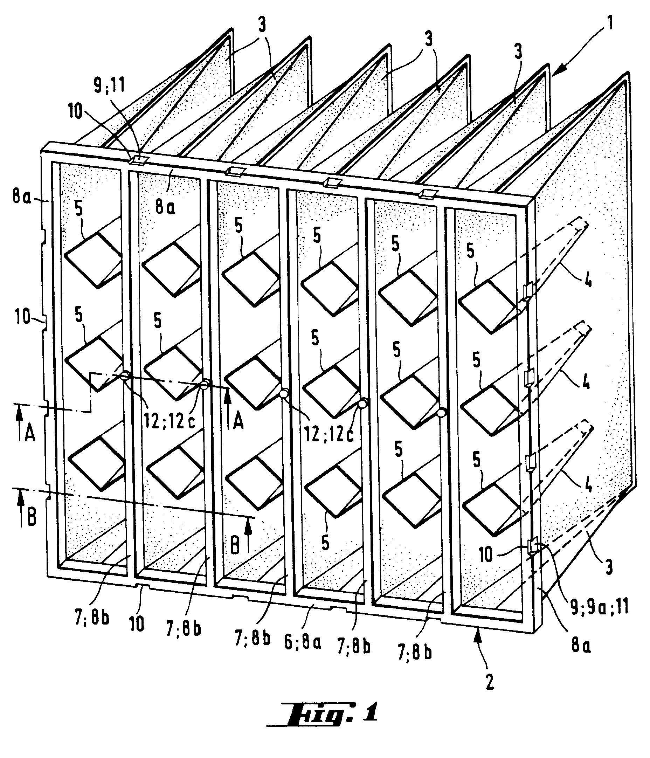

The filterelement 1 comprises a main stiff support frame 2 and wedge shaped filter pockets 3. These filterpockets 3 are preferably of the type having selfsupporting characteristics which are realized by a.o. the application of stiffened cloth materials, such as specially prepared nonwoven filter materials, in addition to appropriate distance means 5, also of non-woven material, positioned along the depth of the filter pocket. The distance means 5 are welded inside in each filter pocket 3 at its both sides along lines 4 and because of their diamond shape their opposite flanks tend to flatten horizontally under load pressure thereby exerting a stabilizing force upon the operating vertical position of the filter pocket and so avoiding blowing up of the filter pocket whereas these distance means tend to fold up vertically (in Fig. 1) in the event loose filter pockets are piled up for storage.

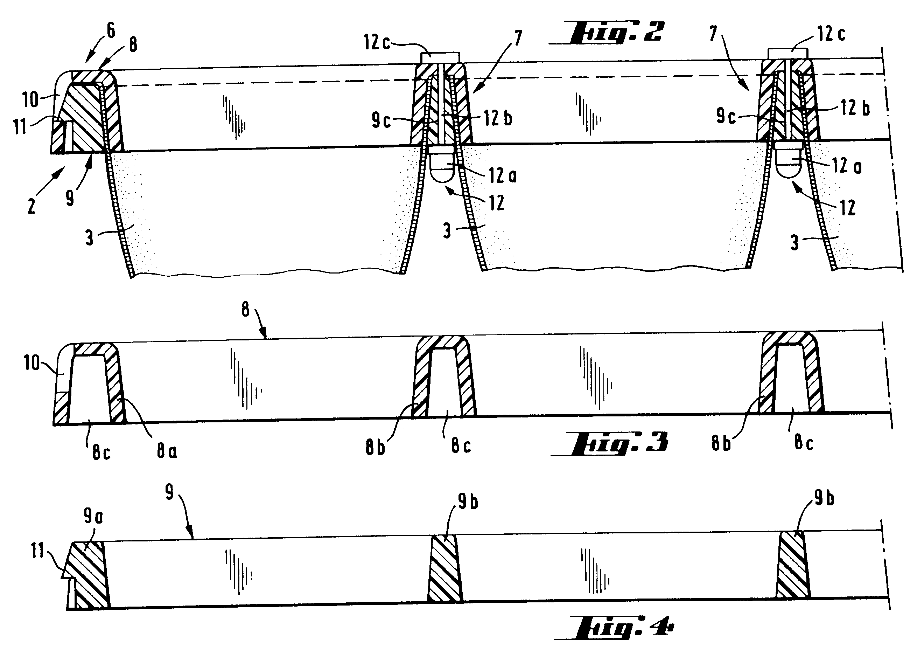

The wedge shaped filter pockets 3 are generally manufactured from nonwoven filter sheet material consisting of glass fibers or of synthetic fibers. The absorption rate for dust particles and the rate of retention are very favorable in such materials.
The main support frame 2 comprises the frame 6 itself and traversing bars or ribs 7. The main support frame 2, see also Fig. 2, is built up of an exterior subframe 8 that snugly fits over an interior subframe 9. In order to achieve a low flow resistance in the air stream wherein it is installed and also to provide for an increased density automatic leakfree seal in the compressed edges of the nonwoven filter pocket mouth material, it is favorable to give the combination of the subframe 8, the frame portion 8a and the traversing bars 8b, in a cross section, a trapezoidal shape, leaving the basis 8c open; see also Fig. 3. In a cross section the frame portion 9a and the traversing bars 9b of the subframe 9 also have a trapezoidal shape and there are provided pin holes 9c (see Fig. 2) for the leakfree insertion of security means 12. In a preferred embodiment there are provided on the periphery of the interior subframe 9 upon which the edges at the mouth of the filter pocket are applied, and at the circumference of the frame portion 9a thereof, a number of protrusions 11 which can be locked by a snapping movement into corresponding receiving openings 10 which are provided in the periphery of the exterior subframe 8. As a result both subframes 8 and 9 can be interconnected while exerting pressure for assembling and the rigid connection so obtained, results in a firm and smooth and rigidly flat assembly of this main support frame 2.
The filter pockets 3 having selfsupporting characteristics, are each applied to the interior subframe 9 by means of their edge of its open ended mouth, i.e. around the traversing bars or ribs 9b and are loosely fitted to the frame portion 9a. The exterior subframe 8 is placed over the interior subframe 9 to which the filter pockets 3 are loosely fitted and in a favorable embodiment, except for its interconnection by means of the interlocking structure of protrusions 11 and receiving openings 10 provided on the subframes 8 and 9 respectively, additionally only secured andleakfree wedged in with security means 12 for interconnecting the subframe 9 and the filter pockets 3, thereby obtaining after its assembling a leakfree and reliable filterelement.
In a preferred embodiment the security means consist of a socalled magnetically operated security pins, known in the art for anti-theft devices of textile consumer goods. These are generally composed of a resin head piece 12a internally provided with elements to magnetically lock a (steel)pin 12b, that is protruded through the material to be secured and locked, this pin being provided with a flat head piece 12c. However the pin can only be magnetically unlocked thereby releasing the filter pockets from the jointly assembled exterior and interior subframes 8 and 9 respectively and thereby the filter pocket edges from the traversing ribs and so enabling easy replacement of the pocket filter cloth inserts.
Preferably the rigid main support frame 2 composed of both subframes 8 and 9, is manufactured from a polyamide which is extremely durable, rigid, and can be granulated and which can be re-utilized by means of a recycling process, it being impact-resistant, thermically stable, having a fracture free surface; it can be easily injection molded and besides it does not contain substances which are environmentally undesirable.
To facilitate an efficient way of assembling and disassembling after the lifetime for of the inserted pocket filterelement has expired, it is proposed to make use of a workbench. Preferably such a workbench should be provided with supporting means for the interior subframe 9 and should be provided with recesses for the filter pockets in order to position the edges of the filterpockets upon the relevant subframe portions and it should also contain supporting means for the traversing ribs. For interlocking the subframes one upon the other frame, whereby the edges of the filter pockets are interengaged by opposite subframe wall portions; pressure means may also be provided on the workbench to force the leakfree compressed and wedged material into a leakfree airseal. To disassemble the filterelement for replacement of the filter pockets it will be preferred to use a tool frame which is provided with special magnets at the location of each security pin to unlock all of them simultaneously. The interlocking engagement between the subframes could be easily unlocked while using a row of upstanding wedge shaped V-shaped tools which can penetrate in the narrow slit at both sides of the protrusion in the frame assembly. After a slight penetration of the tool, which will cause the protrusion 11 to become unlocked from its corresponding receiving opening 10, the exterior subframe 8 can be easily lifted from the interior subframe 9 to replace the pocket filter insert.
The invention provides for a very rigid main frame structure whereas yet the single subframes 8 and 9 respectively are in itself rather flexible and so the filterelement meets very high requirements for rigidity, reliability and flow stability.
Besides, the main frame structure can be used at least 10 times or much more compared with prior art filterelements, thereby resulting in substantial service cost reduction aspects in usage, storage and transportation.

## Claims

1. Filterelement for separation of dust particles from a gas or air flow comprising a number of filter pockets and a main support frame, the open mouths edges of the filter pockets being interconnected to the main support frame and its interconnecting traversing ribs, the main support comprises of two frames which can be interfitted to each other and to said filter pockets, the periphery of the interior frame comprises a number of protrusions whereas the exterior frame is provided with a corresponding number of receiving means such that for interfitting said frames to the main support the protrusions are interlockingly engaged by each of said receiving means by a snapping action due to which simultaneously the open edges of said filter pockets are leakfree and tightly wedged in a narrow slit between the opposed surfaces of said frames, characterized in that the periphery of the interior subframe (9) to which the filter pockets (3) are connected, comprises a number of protrusions (11) whereas the exterior subframe (8) is provided with a corresponding number of receiving openings (10) such that for interfitting said subframes (8,9) into the main support frame, said protrusions (11) are interlockingly engaged by each of said receiving openings (10), whereas the traversing bars or ribs (7) of said frames (8,9) are provided with holes for the insertion of security means (12).

2. Filterelement according to claim 1, characterized in that in a cross section the traversing ribs (9b) of the interior subframe (9) are of trapezoidal shape and in longitudinal direction provided with holes (9c) whereas the traversing ribs of the exterior subframe (8) are of reversed gutterlike trapezoidal shape which longest basis being open and its upper side provided with a hole.

3. Filterelement according to claims 1 or 2, characterized in that the security means (12) mainly consists of a resin head piece (12a) comprising a pin (12b) which can be inserted through a hole of said traversing ribs (8b,9b) whereas its other end being provided with a flat head piece (12c).

4. Filterelement according to claims 1-3, characterized in that said security means comprises of a head piece (12a) internally provided with elements to magnetically lock a pin (12b) inserted through holes of said traversing ribs (8b,9b).

5. Filterelement according to claims 1-4, characterized in that the main support frame (2) has been molded from a granuable resin which is of a recyclable type.

6. Method for assembling a filterelement according to one of the preceding claims, characterized in that in a first operational step the filter pockets (3) are positioned upon a workbench having recesses to accomodate the filter pockets with their open edges fixed to the interior subframe (9) while in a second operational step the exterior subframe (8) is positioned over the interior subframe (9) and forcibly pressed down to interlock the protrusions (11) of the interior subframe (9) with the receiving openings (10) of the exterior subframe (8) one and the other in such a way that these frame portions are interconnected firmly and flatly thereby tightly interwedging the filter pocket edges leakfree in the assembled main support frame (2) and in a third operational step to provide upon the traversing ribs (7) of the main support frame (2) for a number of security locks (12), in such a way that untimely and/or unauthorized loosening of the interassembled subframes (8, 9) and its filter pockets (3) is thereby prevented.

7. Method for disassembling a filterelement according to claims 1-5, characterized in that in a first operational step the security locks (12) are unlocked when the filterelement has been placed upon a workbench, preferably by a number of built-in magnets provided at the location of a security pin lock (12) to disengage the locked pins whereas either in the same operational step or during the next operational step one or more wedge shaped knife tools are forcibly interposed in the narrow slit between adjacent subframe parts (8, 9) at both sides of a protrusion (11) where the latter is interlockingly engaged held by a receiving opening (10) causing the protrusion (11) to be released from the receiving opening (10) whereafter the pocket filters (3) can easily be removed from the disengaged interior subframe (9) with respect to the exterior subframe (8).

## Patentansprüche

1. Filterelement für die Abscheidung von Staubpartikeln aus einem Gas- oder Wasserstrom umfaßt eine bestimmte Anzahl von Filtertaschen und einen Hauptstützrahmen, die geöffneten Öffnungskanten der Filtertaschen sind gegenseitig mit den Hauptstützrahmen und seinen miteinander verbundenen Querstangen verbunden, die Hauptstütze umfaßt zwei Rahmen, die gegenseitig aneinander und mit den genannten Filtertaschen fixiert werden können, der Rand des Innenrahmens umfaßt eine bestimmte Anzahl an Vorwölbungen, der Außenrahmen umfaßt eine entsprechende Anzahl von Annahmepunkten, so daß zum Aneinanderfixieren der genannten Rahmen, die Vorwölbungen mit den genannten Annahmevorrichtungen ineinandergreifen durch einen Einrastvorgang durch den gleichzeitig die geöffneten Kanten der genannten Filtertaschen in einem schmalen Schlitz zwischen den gegenüberliegenden Oberflächen der genannten Rahmen fest verkeilt und ohne undichte Stelle sind, gekennzeichnet dadurch, daß der Rand des inneren Unterrahmans (9) mit dem die Filtertaschen (3) verbunden sind, eine bestimmte Anzahl von Vorwölbungen (11) umfaßt, der äußere Unterrahmen (8) ausgerüstet ist mit einer entsprechenden Anzahl von Annahmeöffnungen (10), so daß für das Miteinanderverbinden der genannten Unterrahmen (8, 9) mit den Hauptstützrahmen, die genannten Vorwölbungen (11) einrastend ineinandergreifen durch die genannten Annahmeöffnungen (10), die Querstangen oder - verstrebungen (7) der genannten Rahmen (8,9) sind ausgestattet mit Löchern zur Einführung von Sicherheitsvorrichtungen.

2. Filterelement entsprechend Anspruch 1, gekennzeichnet dadurch, daß in einem Querschnitt die Querstangen (9b) der inneren Unterrahmen (9) eine trapezoide Form haben und in Längsrichtung mit Löchern versehen sind (9c), die Querstangen des äußeren Unterrahmens (8) sind von entgegengesetzter rinnenartiger trapezoider Form und deren längste Basis ist geöffnet und deren Qberseite mit einem Loch versehen.

3. Filterelement entsprechend Anspruch 1 oder 2, gekennzeichnet dadurch, daß die Sicherheitsvorrichtung hauptsächlich aus einem Kopfstück aus Harz (12a) besteht, das einen Stift (12b) umfaßt, der durch ein Loch der genannten Querstange (8b, 9b) eingeführt werden kann, das andere Ende ist ausgestattet mit einem flachen Kopfstück (12c).

4. Filterelement entsprechend Ansprüchen 1-3, gekennzeichnet dadurch, daß die genannten Sicherheitsvorrichtungen ein Kopfstück (12a) umfassen, das innen mit Elementen zum magnetischen Verriegeln des Stiftes (12b) ausgestattet ist, eingeführt durch die Löcher der genannten Querstangen (8b, 9b).

5. Filterelement entsprechend Ansprüchen 1-4 gekennzeichnet dadurch, daß der Hauptstützrahmen (2) aus granuliertem Recycling-Harz gegossen wurde.

6. Methode für den Zusammenbau eines Filterelementes entsprechend einem der vorausgegangenen Ansprüche, gekennzeichnet dadurch, daß in einem ersten Schritt die Filtertaschen (3) auf eine Werkbank gelegt werden mit Aussparungen, so daß die Filtertaschen mit ihren geöffneten Kanten an den inneren Unterrahmen (9) angebracht werden können, während in einem zweiten Schritt der äußere Unterrahmen (8) über dem inneren Unterrahmen (9) plaziert wird und kräftig nach unten gedrückt wird, damit die Vorwölbungen (11) des inneren Unterrahmens (9) mit den Annahmeöffnungen (10) des äußeren Unterrahmens (8) einrasten, beides so, daß diese Rahmenpartien fest miteinander verbunden und dadurch die Kanten der Filtertaschen mit dem zusammengebauten Hauptstützrahmen (2) fest miteinander verkeilt und ohne undichte Stellen sind und in einem dritten Schritt, auf den Querstangen (7) des Hauptstützrahmens (2) eine bestimmte Anzahl von Sicherheitsverriegelungen (12) vorgesehen werden, so daß das unpassende und/oder unerlaubte Lösen der zusammengebauten Unterrahmen (8, 9) und der Filtertaschen (3) hierdurch vermieden wird.

7. Methode zum Auseinanderbauen eines Filterelements entsprechend den Ansprüchen 1-5, gekennzeichnet dadurch, daß in einem ersten Schritt die Sicherheitsverriegelungen (12) entriegelt werden, nachdem das Filterelement auf eine Werkbank gelegt wurde, vorzugsweise durch eine Anzahl von eingebauten Magneten, angebracht an der Stelle des Sicherheitsstifts (12) um die verriegelten Stifte zu entriegeln, es werden entweder im gleichen Schritt oder beim nächsten Schritt ein oder mehrere messerförmige Keilwerkzeuge in den schmalen Schlitz zwischen beiden anliegenden Unterrahmen (8, 9) geschoben, auf beiden Seiten der Vorwölbungen (11) wo diese in die Annahmeöffnungen (10) eingerastet sind, so daß die Vorwölbung (11) sich aus der Annahmeöffnung (10) löst und dann die Filtertaschen einfach aus dem vom äußeren Unterrahmen (8) gelösten Unzerrahmen (9) herausgenommen werden können.

## Revendications

1. Element filtrant pour la séparation de particules poussiéreux d'un flux de gaz ou d'air, comportant un nombre de boîtiers pour filtres et un chassis principal, les lèvres des boîtiers de filtres étant connectées au chassis principal et aux traverses de ce chassis, qui comprend deux cadres qui peuvent être assemblés entre eux et aux boîtiers de filtres, le cadre intérieur étant pourvu sur sa périphérie d'un nombre de saillies tandis que le cadre extérieur est pourvu d'un nombre correspondant d'orifices qui permettent, afin de monter lesdits cadres sur le chassis principal, d'engager les saillies dans ces logements par une action d'encliquetage, à la suite de laquelle les lèvres ouvertes des boîtiers de filtre sont engagées fermement et sans fuite dans une fente étroite entre les cadres opposés du chassis, caractérisé en ce que la périphérie du cadre (9) intérieur sur lequel les boîtiers (3) de filtre sont connectés, est pourvu d'un nombre de saillies (11) tandis que le cadre (8) extérieur est pourvu d'un nombre correspondant d'orifices (10) récepteurs, permettant, afin de fixer lesdits cadres (8, 9) dans le chassis principal, d 'engager lesdites saillies (11) par encliquetage dans lesdits orifices (10), les barres transversales ou traverses (7) de ces cadres (8, 9) étant pourvues de trous permettant l'insertion de moyens de sécurité (12).

2. Elément filtrant, selon la revendication 1, caractérisé en ce qu'en coupe transversale les barres transversales (9b) du cadre intérieur (9) ont une forme trapézoïdale et sont pourvues dans la direction longitudinale de trous (9c) tandis que les barres transversales du cadre extérieur ont une forme trapezoïdale inversée, ressemblant à une goutière, dont la base la plus longue est ouverte et dont la face supérieure est pourvue d'un trou.

3. Elément filtrant selon la revendication 1 ou 2, caractérisé en ce que les moyens (12) de sécurité sont composés principalement d'une tête (12a) en matière synthétique comprenant un piton (12 b), pouvant être inséré par un trou de ces barres transversales (8b, 9b), tandis que l'autre bout est pourvu d'une tête (12c) plate.

4. Elément filtrant selon les revendications 1 à 3, caractérisé en ce que ces moyens de sécurité comprennent une tête (12a), pourvue intérieurement d'éléments permettant de bloquer magnétiquement un piton (12b) introduit par des trous dans ces barres (8b, 9b) transversales.

5. Elément filtrant selon les revendications 1 à 4, caractérisé en ce que le chassis (2) principal est moulé à partir d'une résine granulaire pouvant être recyclée.

6. Méthode pour assembler un élément filtrant selon une des revendications antérieures caractérisé en ce qu'en une première partie de l'opération les boîtiers (3) de filtre sont positionnés sur un établi pourvu de logements pour recevoir ces boîtiers de filtre, les lèvres ouvertes étant fixées sur le cadre (9) intérieur, en ce que dans une deuxième partie de l'opération le cadre (8) extérieur est positionné sur le cadre (9) intérieur et pressé de force vers le bas afin d'encliqueter les saillies (11) du cadre (9) intérieur dans les logements (10) récepteurs du cadre (8) extérieur, ceci de telle façon, que ces portions de cadre sont interconnectées solidement et dans un plan tout en bloquant les lèvres des boîtiers de filtre sans pertes dans le chassis (2) principal assemblé et en ce que dans une troisième partie de l'opération un nombre de verrous (12) de sécurité sont placés sur les barres (7) du chassis (2) principal, assurant qu'un démontage non autorisé ou prématuré des cadres (8, 9) assemblés et des boîtiers (3) de filtres est empêché.

7. Méthode pour démonter un élément filtrant selon la revendication 5, caractérisé en ce que dans une première partie de l'opération les verrons (12) de sécurité sont débloqués après que l'élément a été placé sur l'établi, de préférence par un nombre d'aimants intégrés et placés à l'endroit des verrous (12) permettant de débloquer ces verrous (12) tandis que dans cette même partie de l'opération ou pendant la partie suivante, un ou plusieurs outils coupants en forme de coin sont insérés de force dans la tente étroite entre les cadres (8, 9) adjacents des deux côtés d'une saillie (11) pendant que celle-ci est tenue par encliquetage par le logement (10), assurant que la saillie (11) est relachée de l'ouverture (10) réceptrice, les poches (3) de filtre pouvant ainsi être facilement démontées du cadre (9) intérieur dégagé par rapport au cadre (8) extérieur.
